# EUROPEAN PATENT APPLICATION

(11) **EP 4 667 392 A1**
(43) Date of publication of application: **24.12.2025**
(21) Application number: 25177409.7
(22) Date of filing: 19.05.2025
(51) Int. Cl.: B65G 21/22, B61B 13/00, B65G 35/06

(54) **A TRACK SYSTEM AND METHOD THEREOF**

(30) Priority: 20.06.2024 CN 202410800621
(71) Applicant: Intelligrated Headquarters LLC, Mason, OH 45040 (US)
(72) Inventor: YU, Feng, Charlotte, 28202 (US); LI, Yun, Charlotte, 28202 (US)
(74) Representative: Haseltine Lake Kempner LLP

(57) **Abstract**

A track system and a method are disclosed. The track system comprising a pair of conveyor tracks defines an inner side and an outer side. Each conveyor track comprises a running portion comprising a running surface on the inner side of the conveyor track, a mounting portion comprising a mounting surface on the inner side, and a first cable tray monolithic with the mounting portion. The first cable tray extends a width of the conveyor track. Each side cover of a pair of side covers is detachably mounted with the outer side, and is configured to cover the first cable tray. Each connect rail is positioned between each of the pair of the conveyor tracks and coupled with the mounting portion. Thereafter, one or more openings are fabricated through the mounting portion for passage of one or more cables across the first cable tray and the second cable tray.

## Description

### TECHNOLOGICAL FIELD

The present invention relates to a conveyor track, and more particularly relates to a track system and a method thereof.

### BACKGROUND

Conveyor systems are a cornerstone of modern industrial processes, facilitating the seamless movement of goods and materials throughout manufacturing facilities, warehouses, and distribution centers. Conveyor system often include cables, such as electrical cables, to supply electricity to various electrical components of the conveyor system. Routing these cables to various locations on the conveyor system often results in a lack of an integrated look, which may result in a perceived lack of quality of the conveyor system.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In one example embodiment, a track system is disclosed. The track system comprising a pair of conveyor tracks. Further, each of the pair of the conveyor tracks define an inner side and an outer side. Further, each conveyor track comprises a running portion comprising a running surface on the inner side of the conveyor track, a mounting portion comprising a mounting surface on the inner side of the conveyor track. Further, the running portion is monolithic with the mounting portion, and a first cable tray monolithic with the mounting portion. Further, the first cable tray extends a width of the conveyor track. Further, a pair of side covers, each side cover detachably mounted with the outer side of a respective conveyor track. Further, the side cover is configured to cover the first cable tray of the respective conveyor track. Thereafter, one or more connect rails, each connect rail positioned between each of the pair of the conveyor tracks and coupled with the mounting portion. Further, the one or more connect rails have a second cable tray. Further, one or more openings are fabricated through the mounting portion for passage of one or more cables across the first cable tray and the second cable tray.

In some embodiments, the running portion, the mounting portion, and the first cable tray of each conveyor track are formed from a single piece of sheet metal. Further, each conveyor track has an S shape.

In some embodiments, each connect rail comprises a first end and a second end. Further, the first end is coupled to one of the pair of the conveyor tracks and the second end is coupled to another one of the pair of the conveyor tracks. In some embodiments, the mounting portion of each conveyor track is fabricated with a slot. Further, the slot is configured to detachably couple the first end and the second end of a respective connect rail with each of the pair of conveyor tracks.

In some embodiments, the first cable tray is configured to hold the one or more cables along the respective conveyor track of the pair of conveyor tracks. In some embodiments, each side cover is configured to cover the respective first cable tray to hide the one or more cables within the respective first cable tray.

In some embodiments, the running surface of the running portion and the mounting surface of the mounting portion are coplanar. In some embodiments, the side cover comprises a first end and a second end. Further, the first end is coupled with an extended structure of the running portion and the second end is coupled with the first cable tray.

In some embodiments, the first end coupled to the extended structure of the running portion and the second end coupled to the first cable tray are on a same plane. In some embodiments, the extended structure and a portion of the first cable tray are coplanar and are is configured to enable installing of one or more accessories with the track system.

In another example embodiment, a method is disclosed. The method comprising steps of mounting each side cover of a pair of side covers with an outer side of a respective conveyor track from a pair of conveyor tracks. Further, the pair of conveyor tracks comprises a running portion comprising a running surface on an inner side of the conveyor tracks, a mounting portion comprising a mounting surface on the inner side of the conveyor track. Further, the running portion is monolithic with the mounting portion, and a first cable tray monolithic with the mounting portion. Further, the first cable tray extends a width of the conveyor track. Further, the method comprises steps of positioning one or more connect rails between each of the pair of the conveyor tracks and coupled with the mounting portion. Further, the one or more connect rails having a second cable tray wherein one or more openings are fabricated through the mounting portion for passage of one or more cables across the first cable tray and the second cable tray.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1A illustrates an isometric view of a track system in accordance with an example embodiment of the present disclosure;
FIG 1B illustrates an exploded view of the track system in accordance with an example embodiment of the present disclosure;
FIG. 1C illustrates a front view of at least one conveyor track from a pair of conveyor tracks in accordance with an example embodiment of the present disclosure;
FIG. 2A illustrates an isometric view of the at least one conveyor track from the pair of conveyor tracks in accordance with an example embodiment of the present disclosure;
FIG. 2B illustrates a front view of the track system mounted with a conveyor drive in accordance with an example embodiment of the present disclosure;
FIG. 3 illustrates an inner side of the pair of conveyor tracks showing at least one connect rail from the one or more connect rails detachably mounted to the at least one conveyor track in accordance with an example embodiment of the present disclosure;
FIG. 4A illustrates a front view of the at least one conveyor track from the pair of conveyor tracks mounted with at least one side cover from the pair of side covers in accordance with an example embodiment of the present disclosure;
FIG. 4B illustrates a side view of the at least one conveyor track mounted with the at least one side cover from the pair of side covers in accordance with an example embodiment of the present disclosure;
FIG. 4C illustrates a top view of the at least one conveyor track mounted with the at least one side cover in accordance with an example embodiment of the present disclosure;
FIG. 4D illustrates a bottom view of the at least one conveyor track mounted with the at least one side cover in accordance with an example embodiment of the present disclosure;
FIG. 5 illustrates an architectural view of the track system installed within a facility in accordance with an example embodiment of the present disclosure; and
FIG. 6 illustrates a cross sectional view of the track system installed with the one or more accessories, in accordance with an example embodiment of the present disclosure;

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. As discussed herein, the protection devices may be referred to use by humans, but may also be used to raise and lower objects unless otherwise noted.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

The present disclosure provides various embodiments of a track system and a method thereof. Embodiments may comprise a pair of conveyor tracks that may be configured to define an inner side and an outer side. Embodiments may comprise a running portion comprising a running surface on the inner side of the conveyor track. Embodiments may comprise a mounting portion comprising a mounting surface on the inner side of the conveyor track. Embodiments may comprise a first cable tray monolithic with the mounting portion. Embodiments may comprise a pair of side covers, each side cover detachably mounted with the outer side of a respective conveyor track. Embodiments may be configured to cover the first cable tray of the respective conveyor track. Embodiments may comprise one or more connect rails, each connect rail may be positioned between each of the pair of the conveyor tracks and coupled with the mounting portion. Embodiments may comprise one or more openings are fabricated through the mounting portion for passage of one or more cables across the first cable tray and the second cable tray.

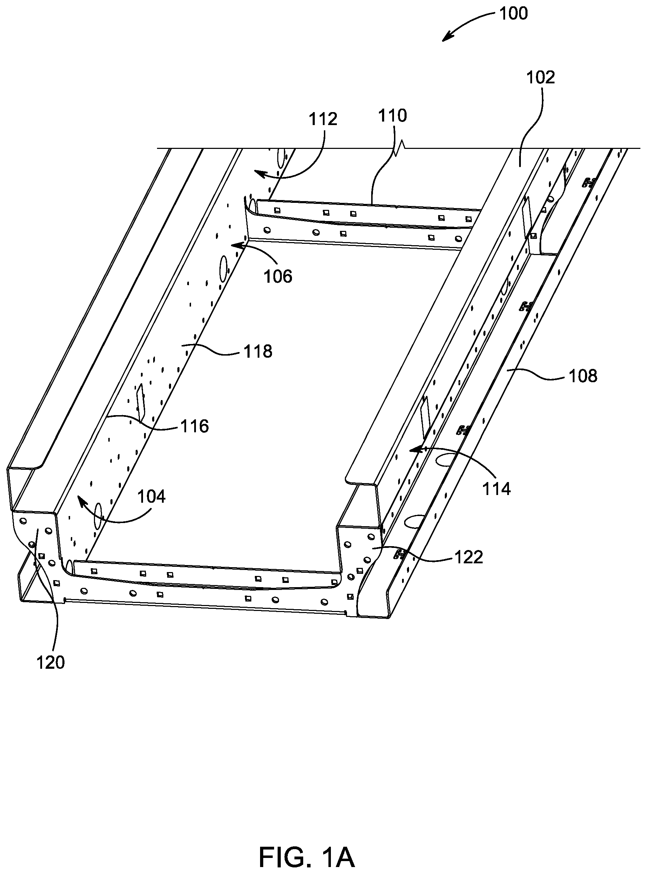

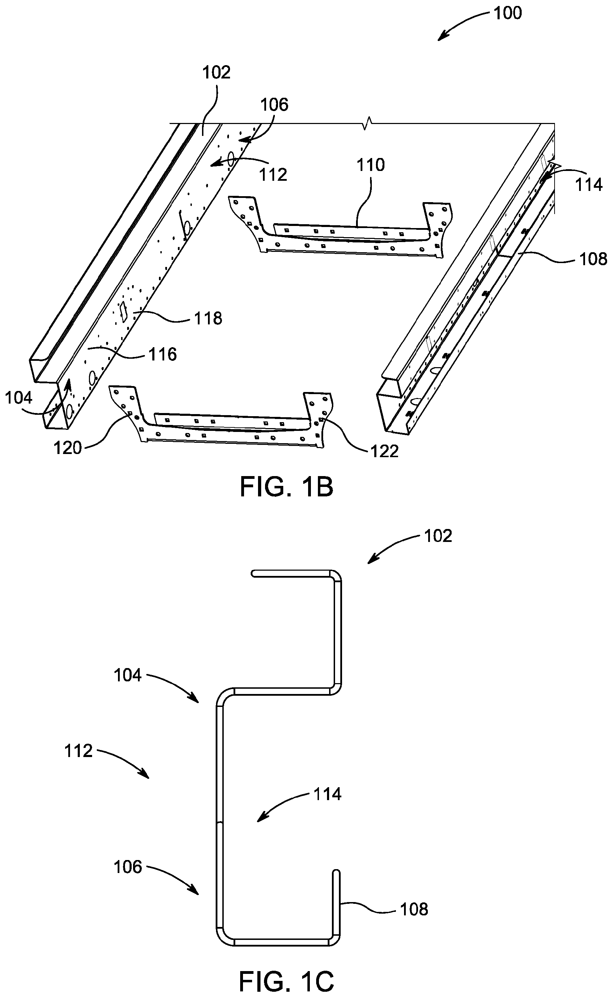

FIG. 1A illustrates an isometric view of a track system 100, in accordance with an example embodiment of the present disclosure. FIG 1B illustrates an exploded view of the track system 100, in accordance with an example embodiment of the present disclosure.

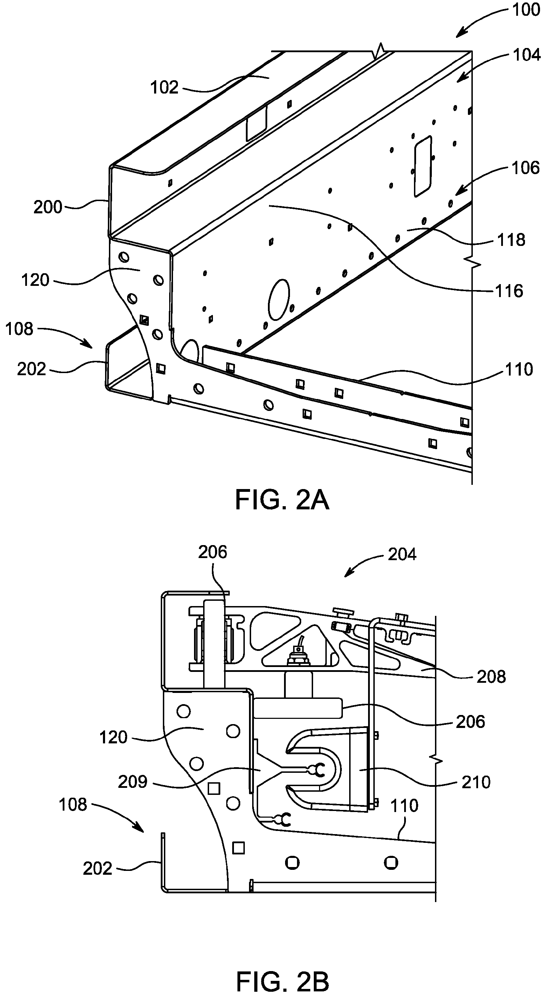

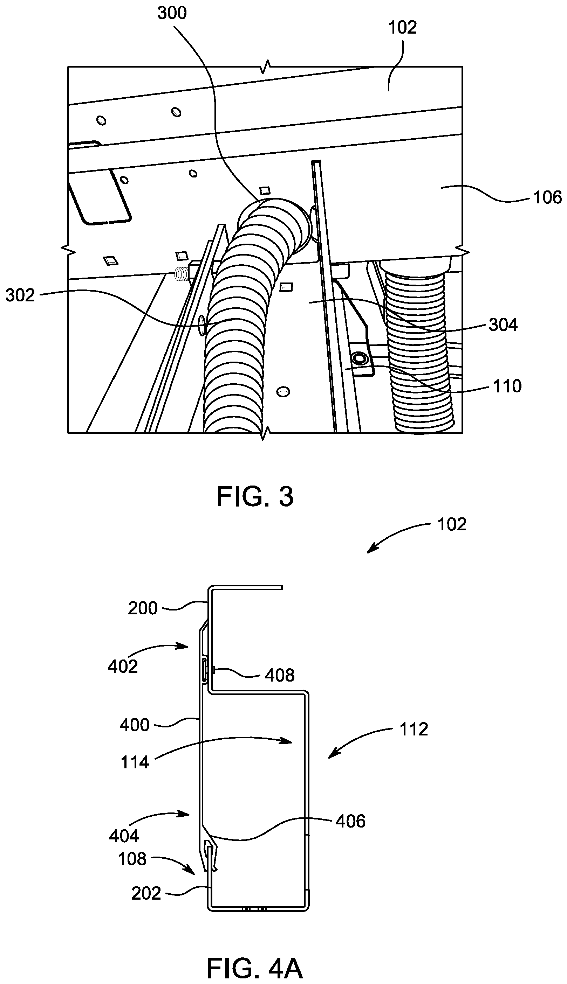

The track system 100 may comprise a pair of conveyor tracks 102. Each conveyor track may comprise a running portion 104, a mounting portion 106, and a first cable tray 108. Further, the track system 100 may comprise a pair of side covers 400 (FIG. 4A). The track system 100 may comprise one or more connect rails 110. In some embodiments, the track system 100 may be operationally associated with a conveyor system. Further, the conveyor system may be configured to be installed within a facility. Further, the facility may correspond to a warehouse, a manufacturing industry, a material loader, etc. In some embodiments, the conveyor system may comprise a conveyor drive 204 (FIG. 2B). Further, the conveyor drive 204 may be configured to move over the track system 100 for transporting one or more packages, raw materials, a plurality of objects of various sizes, etc. from a source point to a destination point within the facility. In one example, the conveyor drive 204 may comprise one or more stationary components and one or more moving components. Further, the one or more moving components may comprise a pair of wheels 206 (FIG. 2B) that may be configured to move over the track system 100 in a linear direction. For example, at least one of the wheels 206 may be positioned to move over the running portion 104 of the respective conveyor track 102.

In some embodiments, the track system 100 may comprise the pair of conveyor tracks 102. In some embodiments, the pair of conveyor tracks 102 may be configured to provide a platform to move the conveyor drive 204 over the track system 100 in the linear direction. Further, the pair of conveyor tracks 102 may be configured to accommodate the pair of wheels 206 of the conveyor drive 204. In some embodiments, the pair of wheels 206 may be configured to move over the pair of conveyor tracks 102. In some embodiments, the pair of conveyor tracks 102 may be configured to be installed along a total length of the track system 100.

In some embodiments, the pair of conveyor tracks 102 may be crafted with an elongated shape. In some embodiments, the pair of conveyor tracks 102 may be composed of a durable material. Further, the durable material may comprise at least one of a steel, iron, aluminum, etc. In some embodiments, the durable material of the pair of conveyor tracks 102 may be selected in a view of preventing any damage to the pair of conveyor tracks 102 due to one or more environmental factors or a mechanical stress generated during operations of the conveyor drive 204. Further, the one or more environmental factors may comprise at least one of a temperature, humidity, etc.

As illustrated in FIG. 1A, each of the pair of conveyor tracks 102 may define an inner side 112 and an outer side 114. In some embodiments, the inner side 112 of the pair of conveyor tracks 102 may correspond to a side of each conveyor track that may not be exposed to an outer surroundings of the conveyor system. Further, the inner side 112 of at least one conveyor track from the pair of conveyor tracks 102 may be configured to be aligned in parallel with the inner side 112 of another conveyor track from the pair of conveyor tracks 102. In some embodiments, the outer side 114 of the pair of tracks 102 may correspond to a side of each conveyor track that may be exposed to the outer surroundings of the conveyor system.

In some embodiments, each of the conveyor track may comprise the running portion 104. Further, the running portion 104 of each conveyor track from the pair of conveyor tracks 102 may be configured to provide the platform to a wheel 206 of the conveyor drive 204 to move in the linear direction. In some embodiments, the running portion 104 of each conveyor track from the pair of conveyor tracks 102 may comprise a running surface 116. In some embodiments, each conveyor track from the pair of conveyor tracks 102 may further comprise the mounting portion 106. In some embodiments, the mounting portion 106 of the pair of conveyor tracks 102 may be configured to enable mounting of the one or more stationary components associated with the conveyor drive 204 with the pair of conveyor tracks 102. In some embodiments, the one or more stationary components may correspond to a cable bracket 209. In some embodiments, the cable bracket 209 may be used for mounting the inducting power cable for wireless power transfer system, which may provide power source for running parts such as belt, Programmable Logic Controllers (PLCs), and other electrical devices on the running loop. In some embodiments, the mounting portion 106 may comprise a mounting surface 118. Further, the mounting surface 118 may be configured to enable placement of the cable bracket 209 (FIG. 2B) of the conveyor drive 204 on the pair of conveyor tracks 102.

In some embodiments, the mounting surface 118 of the mounting portion 106 and the running surface 116 of the running portion 104 may be constructed on a same plane. In some embodiments, the mounting portion 106 and the running portion 104 of each of the pair of conveyor tracks 102 may collectively define a height of 206.00 mm. Further, a coplanar construction of the running surface 116 and the mounting surface 118 may prevent requirements of one or more additional mounting sheet metal plates during installation of the one or more stationary components (i.e., the cable bracket 209, etc.) with the mounting surface 118 of the mounting portion 106 of each conveyor track 102 from the pair of conveyor tracks 102. Further, the coplanar construction of the running surface 116 and the mounting surface 118 may enable an easy installation of the one or more stationary components on the inner side 112 of each of the pair of conveyor tracks 102.

In some embodiments, each of the pair of conveyor tracks 102 may comprise the first cable tray 108. Further, the first cable tray 108 may be mounted with the outer side 114 of a respective conveyor track. In some embodiments, the first cable tray 108 may be configured to carry one or more cables 302 (FIG. 3). In one example, the one or more cables 302 may be connected with the conveyor drive 204 and one or more accessories associated with the conveyor drive 204. In some embodiments, the first cable tray 108 may be monolithic with the mounting portion 106 of each of the pair of conveyor tracks 102. In some embodiments, the first cable tray 108 may be monolithic with the mounting portion 106 of each of the pair of conveyor tracks 102. In some embodiments, the first cable tray 108 may define a width of 92.50 mm and a depth of 60.00 mm. In some embodiments, the first cable tray 108 may be configured to extend a width of the each conveyor track from the pair of conveyor tracks 102.

In some embodiments, the track system 100 may further comprise the pair of side covers 400. In some embodiments, the pair of side covers 400 may be detachably mounted with the outer side 114 of the respective conveyor track. Further, the pair of side covers 400 may be configured to cover the first cable tray 108 of the respective conveyor track. In some embodiments, the pair of side covers 400 may be configured to prevent any debris to enter into the first cable tray 108. Further, the pair of side covers 400 may be configured to secure the one or more cables 302 placed within the first cable tray 108.

In some embodiments, the track system 100 may further comprise the one or more connect rails 110. In some embodiments, each connect rail 110 from the one or more connect rails 110 may be positioned between each pair of the conveyor tracks 102. In some embodiments, the one or more connect rails 110 may be coupled with the mounting surface 118 of the mounting portion 106 of each of the pair of conveyor tracks 102. Further, the one or more connect rails 110 may be configured to mount the pair of conveyor tracks 102 with each other. Further, the one or more connect rails 110 may be composed of a material. Further, the material may comprise at least one of a steel, aluminum, iron, etc. Further, the one or more connect rails 110 may be configured to ensure durability of the pair of conveyor tracks 102. In some embodiments, the one or more connect rails 110 may be mounted between the pair of conveyor tracks 102 and separated from each other by a distance of 0.2-1.45 meters. Further, the one or more connect rails 110 may be constructed with a shape that may include but not limited to a U-shape, L-shape, inverted U-shape, etc.

In some embodiments, the one or more connect rails 110 may have a second cable tray 304 (FIG. 3). Further, the second cable tray 304 may be configured to carry the one or more cables 302. Further, the second cable tray 304 may be configured to carry the one or more cables 302 that may travel across the pair of conveyor tracks 102. Further, the second cable tray 304 may be constructed with a width of 75 mm. In one example, the width of the second cable tray 304 may be less as compared to the width of the first cable tray 108. In some embodiments, the second cable tray 304 may be configured to guide the one or more cables 302 from one of the conveyor track to other conveyor track of each conveyor tracks 102.

As illustrated in FIGS. 1A and 1B, each of the one or more connect rails 110 may comprise a first end 120 and a second end 122. Further, the first end 120 and the second end 122 of each of the one or more connect rails 110 may be configured to mount with the mounting surface 118 of the mounting portion 106 of each conveyor track from the pair of conveyor tracks 102. In one example, one or more connecting elements such as bolted-screws, locking knobs, etc. may be configured to enable mounting of the one or more connect rails 110 with the pair of conveyor tracks 102.

In some embodiments, each conveyor track from the pair of conveyor tracks 102 may be fabricated with one or more openings 300 (FIG. 3). Further, the one or more openings 300 may be fabricated over the mounting portion 106 of each of the pair of conveyor tracks 102. Further, the one or more openings 300 may be configured to provide a passage to the one or more cables 302 across the first cable tray 108 and the second cable tray 304. Further, each opening from the one or more openings 300 may be crafted with at least one machining process such as cutting, drilling, etc. Further, the one or more openings 300 may define a diameter of 52 mm. Further, the diameter of the one or more openings 300 may be selected in a view to provide a proper fitting to the one or more cables 302. In one example, the one or more openings 300 is a knockout hole that may comprises a flap that may detachably cover the one or more openings 300. The flap may be punched out by a user to free up the space within the one or more openings 300.

FIG. 1C illustrate a front view of at least one conveyor track from the pair of conveyor tracks 102, in accordance with an example embodiment of the present disclosure. FIG. 1C is described in conjunction with FIGS. 1A and 1B.

In some embodiments, each conveyor track from the pair of conveyor tracks 102 may comprise the running portion 104, the mounting portion 106, and the first cable tray 108. In some embodiments, the running portion 104, the mounting portion 106, and the first cable tray 108 of each conveyor track from the pair of conveyor tracks 102 may be formed from a single piece of sheet metal. Further, the single piece of sheet metal may be passed through one or more machining processes (e.g., a sheet metal bending process) to form the running portion 104, the mounting portion 106, and the first cable tray 108 of each conveyor track from the pair of conveyor tracks 102. Further, the one or more machining processes may comprise at least one of a hydraulic pressing, pneumatic pressing, heating, hammering, etc.

In some embodiments, the single metal piece may be composed of a material that may comprise at least one of a steel, aluminum, iron, etc. Further, each conveyor track from the pair of conveyor tracks 102 may be constructed with a shape. Further, the shape of each of the pair of conveyor tracks 102 may comprise at least one of a S-shape, inverted S-shape, etc. Further, each of the pair of conveyor tracks 102 may comprise an upper section and a lower section. Further, the upper section of the pair of conveyor tracks 102 may correspond to the running portion 104. Further, the lower section of the pair of conveyor tracks 102 may correspond to the mounting portion 106.

FIG. 2A illustrates an isometric view of the at least one conveyor track from the pair of conveyor tracks 102, in accordance with an example embodiment of the present disclosure. FIG. 2B illustrates a front view of the track system 100 mounted with the conveyor drive 204, in accordance with an example embodiment of the present disclosure. FIGS. 2A and 2B are described in conjunction with FIGS. 1A-1C.

In some embodiments, the pair of conveyor tracks 102 may define the inner side 112 and the outer side 114. Further, the inner side 112 of each conveyor track 102 from the pair of conveyor tracks 102 may comprise the running portion 104 and the mounting portion 106. In some embodiments, the running portion 104 of each conveyor track from the pair of conveyor tracks 102 may comprise the running surface 116. In some embodiments, the running portion 104 may be fabricated with a material that may provide grip to the pair of wheels 206 of the conveyor drive 204. Further, the material may comprise a silicon material, rubberized material, etc. In some embodiments, the running portion 104 may correspond to the upper section of the pair of conveyor tracks 102. In some embodiments, the running surface 116 of the running portion 104 may be coplanar to the mounting portion 106 of the pair of conveyor tracks 102.

In some embodiments, the inner side 112 of the pair of conveyor tracks 102 may comprise the mounting portion 106. In some embodiments, the mounting portion 106 may comprise the mounting surface 118. Further, the mounting surface 118 of the mounting portion 106 may be configured to enable installation of the conveyor drive 204 and the one or more accessories with the pair of conveyor tracks 102. In some embodiments, the running portion 104 may be monolithic with the mounting portion 106. In some embodiments, the mounting portion 106 and the running portion 104 of the pair of conveyor tracks 102 may be formed by the single piece of sheet metal. In one example, the mounting surface 118 may comprise a plurality of holes that may ensure installation of the conveyor drive 204 and the one or more accessories with the pair of conveyor tracks 102.

In some embodiments, an extended structure 200 may be associated with the pair of conveyor tracks 102. In some embodiments, the extended structure 200 may be an extended section of the running surface 116. In some embodiments, the extended structure 200 may comprise a vertical plate and a horizontal plate. In some embodiments, the vertical plate of the extended structure 200 may define a height of 95 mm. Further, the horizontal plate of the extended structure 200 may define a width of 65.50 mm. The vertical plate may be monolithic with the running surface 116. Further, the vertical plate of the extended structure 200 may create a 90° angle with the running surface 116. Further, the horizontal plate may be monolithic with the vertical plate and may create another 90° angle with the vertical plate. In one example, the vertical plate and the horizontal plate may form an inverted L shape structure for the extended structure 200. In some embodiments, a portion 202 of the first cable tray 108 may be associated with the pair of conveyor tracks 102. In some embodiments, the portion 202 may be monolithic with the first cable trays 108. The portion 202 may create a 90° angle with the first cable tray 108. In some embodiments, the portion 202 may be configured to provide support to the one or more cables 302.

As illustrated in FIG. 2B, the one or more moving components of the conveyor drive 204 may further comprise a chassis 208, the pair of wheels 206, and the power collector 210. In some embodiments, the conveyor drive 204 may be configured to move over the pair of conveyor tracks 102 in a linear direction. In some embodiments, the chassis 208 may be configured to provide a platform to the pair of wheels 206 and the power collector 210. In some embodiments, the pair of wheels 206 may be configured to move over the running portion 104 of the pair of conveyor tracks 102. In some embodiments, each of the pair of wheels 206 may be operationally coupled with a motor that may be configured to provide movement to the pair of wheels 206 over the pair of conveyor tracks 102. In some embodiments, the power collector 210 may be configured to receive the electric power supply from a power transmitter (not shown).

As illustrated in FIGS. 2A and 2B, the pair of conveyor tracks 102 may be detachably mounted with the one or more connect rails 110. In some embodiments, each connect rails 110 from the one or more connect rails 110 may comprise the first end 120 and the second end 122. In some embodiments, each of the one or more connect rails 110 may be mounted with the pair of conveyor tracks 102 through the first end 120 and the second end 122. In some embodiments, the first end 120 may be coupled to one of the pair of conveyor tracks 102. In some embodiments, the second end 122 of each of the one or more connect rails 110 may be coupled to another one of the pair of conveyor tracks 102.

In some embodiments, the mounting portion 106 of each conveyor track from the pair of conveyor tracks 102 may be fabricated with a slot (not shown). Further, the slot may be configured to detachably couple the first end 120 and the second end 122 of a respective connect rail with each of the pair of conveyor tracks 102. In some embodiments, the slot may be constructed with a diameter 13 mm. In one example, the slot may be constructed over the pair of conveyor tracks 102 through one or more machining processes.

FIG. 3 illustrates the inner side 112 of the pair of conveyor tracks 102 showing at least one connect rail from the one or more connect rails 110 detachably mounted to the at least one conveyor track, in accordance with an example embodiment of the present disclosure. FIG. 3 is described in conjunction with FIGS. 1A- 2B.

In some embodiments, the mounting portion 106 of the pair of conveyor tracks 102 may be fabricated with the one or more openings 300. Further, the one or more openings 300 may be configured to provide passage of the one or more cables 302 across the first cable tray 108 and the second cable tray 304. In some embodiments, the one or more openings 300 may be constructed with a shape that may include but not limited to a circular shape, an oval shape, etc. Further, the one or more cables 302 may be accommodated within the second cable tray 304. Further, the one or more cables 302 may be passed through the one or more openings 300 while moving from the first cable tray 108 to the second cable tray 304.

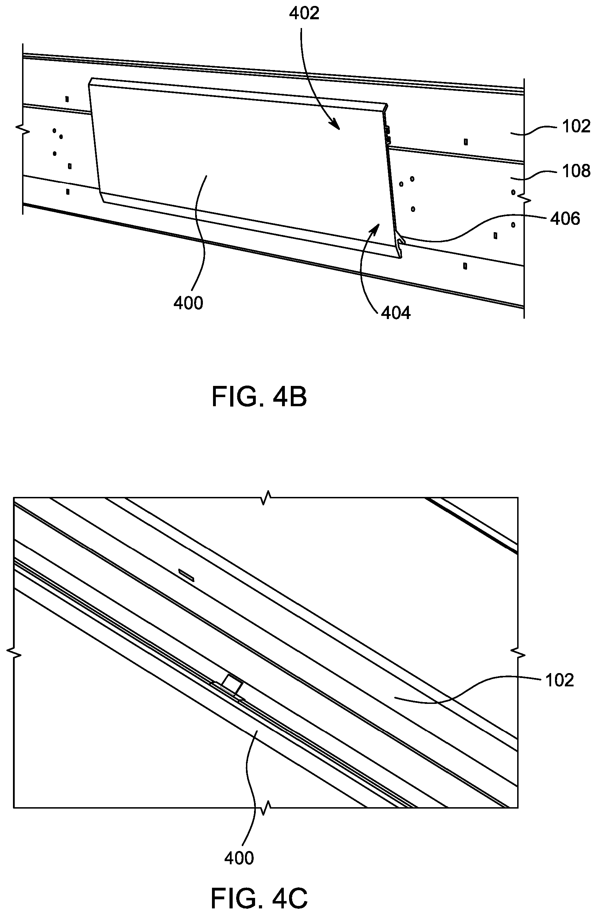

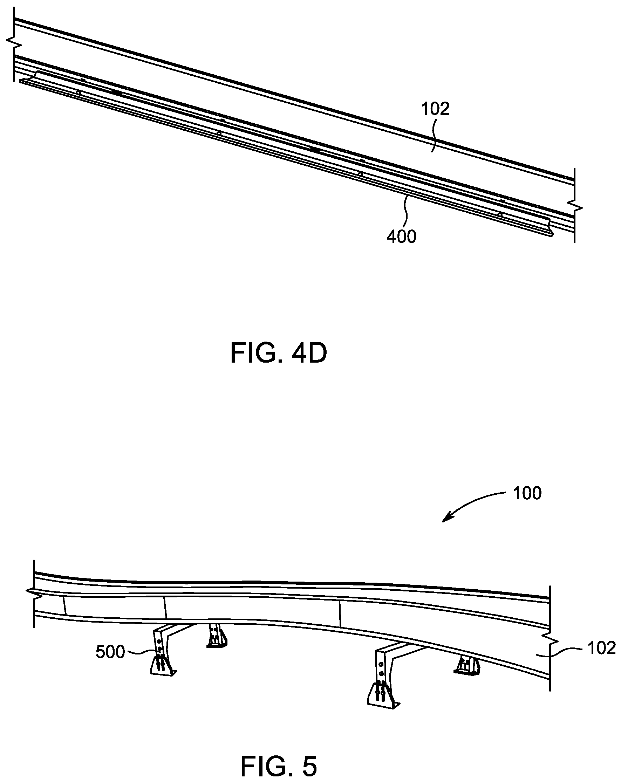

FIG. 4A illustrates a front view of the at least one conveyor track from the pair of conveyor tracks 102 mounted with at least one side cover from the pair of side covers 400, in accordance with an example embodiment of the present disclosure. FIG. 4B illustrates a side view of the at least one conveyor track mounted with the at least one side cover from the pair of side cover 400, in accordance with an example embodiment of the present disclosure. FIG. 4C illustrates a top view of the at least one conveyor track mounted with the at least one side cover, in accordance with an example embodiment of the present disclosure. FIG. 4D illustrates a bottom view of the at least one conveyor track mounted with the at least one side cover, in accordance with an example embodiment of the present disclosure.

In some embodiments, each side cover from the pair of side covers 400 may be detachably mounted with the outer side 114 of the respective conveyor track. In some embodiments, the pair of side covers 400 may be configured to cover the first cable tray 108 of the respective conveyor track. In some embodiments, each side cover from the pair of side covers 400 may be configured to cover the respective first cable tray 108 to hide the one or more cables 302 within the respective first cable tray 108. In some embodiments, the pair of side covers 400 may be detachably mounted with the outer side 114 of the pair of conveyor tracks 102.

In some embodiments, each of the pair of side covers 400 may comprise a first end 402 and a second end 404. In some embodiments, the first end 402 of the pair of side covers 400 may be configured to be coupled with the extended structure 200 of the running portion 104 of the pair of conveyor tracks 102. In some embodiments, the extended structure 200 of the running portion 104 may be crafted with a shape that may include but not limited to an inverted L-shape, an inverted C-shape, etc. In some embodiments, the second end 404 of each pair of side covers 400 may be configured to be coupled with portion 202 of the cable tray 108. The portion 202 of the cable tray 108 may extend along the same plane as the vertical portion of the extended structure. Having the portion 202 of the cable tray 108 that extends along the same plane as the vertical portion of the extended structure may be beneficial because it allows easier installation of various components, such as a photo eye, which may detect a position of the conveyor drive. In some embodiments, the first end 402 coupled to the extended structure 200 of the running portion 104 and the second end 404 coupled to the first cable tray 108 are on a same plane. In one example, the extended structure 200 of the running portion 104 may be coupled to the first end 402 of the pair of side covers 400 via a fastener 408. In some embodiments, the fastener 408 may correspond to a rivet or a screw. In one example, each of the side cover from the pair of side covers 400 may comprise a mounting clip 406 (as illustrated in FIGS. 4A and 4B). In some embodiments, the mounting clip 406 may be configured detachably attach the second end 404 of the pair of side covers 400 with the pair of conveyor tracks 102.

In some embodiments, the mounting clip 406 may be configured to grip the portion 202 of the first cable tray (as illustrated in FIG. 4C). In some embodiments, the mounting clip 406 may be constructed with a shape that may include but not limited to a c-shape, V-shape, etc. In some embodiments, the mounting clip 406 may be configured to grab the portion 202 of the first cable tray 108 to secure the pair of side covers 400 with the pair of conveyor tracks 102 and the first cable tray 108 (as illustrated in FIG. 4D). In some embodiments, the extended structure 200 of the running portion 104 and the portion 202 of the first cable tray 108 may be coplanar. Further, the extended structure 200 of the running portion 104 and the portion 202 of the first cable tray 108 may be configured to enable installation of the one or more accessories with the track system 100.

FIG. 5 illustrates an architectural view of the track system 100 installed within the facility, in accordance with an example embodiment of the present disclosure. FIG. 5 is described in conjunction with FIGS. 1-4D.

In some embodiments, the track system 100 may be installed within the facility to enable movement of the conveyor drive 204 of the conveyor system. In some embodiments, the facility may correspond to the warehouse, factory, mine, etc. Further, the pair of conveyor tracks 102 of the track system 100 may be installed at a predefined height above the ground surface. Further, each of the pair of conveyor tracks 102 may be installed with a plurality of supporting bars 500. Further, the plurality of supporting bars 500 may be configured to provide support to the pair of conveyor tracks 102 when positioned at the predefined height above the ground surface. In some embodiments, the plurality of supporting bars 500 may be separated from each other by a predefined distance. Further, the distance between each of the plurality of supporting bars 500 may be selected to ensure a proper weight distribution of the conveyor track system 100 over each of the plurality of supporting bars 500. In some embodiments, the pair of conveyor tracks 102 may be linearly oriented within the facility to ensure proper alignment of the one or more goods while moving over the conveyor system.

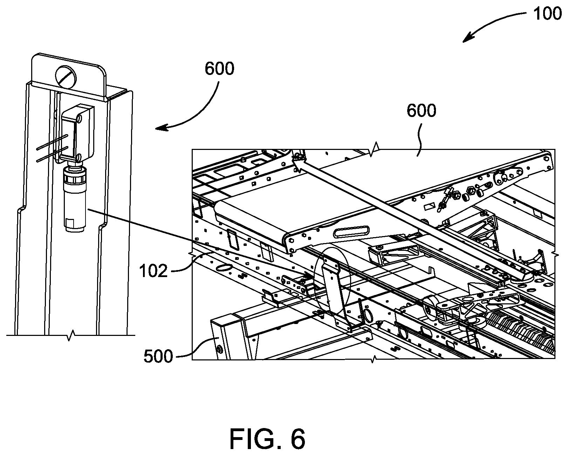

FIG. 6 illustrates a cross sectional view of the track system 100 installed with one or more accessories 600, in accordance with an example embodiment of the present disclosure.

In some embodiments, the track system 100 may be installed with the one or more accessories 600. Further, the extended structure 200 of the running portion 104 and the portion of the first cable tray 108 may be configured to enable installation of the one or more accessories 600 with the track system 100. In one example, the one or more accessories 600 may correspond to a photo eye sensor, a motion sensor, a light sensor, an infrared (IR) sensor, etc. Further, the extended structure 200 of the running portion 104 and the portion 202 of the first cable tray 108 may be coplanar that may enable an easy installation of the one or more accessories 600 over the track system 100.

In one example, when the one or more accessories 600 correspond to a photo eye sensor, the phot eye sensor may be configured to detect positioning of the conveyor drive 204 while moving over the pair of conveyor tracks 102. Further, the photo eye sensor may comprise an emitter and a reflector. Further, the emitter may be installed on the outer side 114 of the at least one conveyor track from the pair of conveyor tracks 102. Further, the reflector may be installed on a side of the conveyor drive 204. Further, the coplanar orientation of the extended structure 200 and the portion 202 of the first cable tray 108 ensures alignment of the emitted to the reflector.

In some embodiments, a method for the track system 100 is disclosed. The method comprises one or more steps. At first, the one or more connect rails 110 may be positioned between the pair of conveyor tracks 102. Further, each of the pair of conveyor tracks 102 may define the inner side 112 and the outer side 114. Further, each conveyor track from the pair of conveyor tracks 102 may comprise the running portion 104 comprising the running surface 116 on the inner side 112 of the pair of conveyor tracks 102. Further, each conveyor track may comprise the mounting portion 106 comprising the mounting surface 118 on the inner side 112 of the conveyor track. Further, the running portion 104 may be monolithic with the mounting portion 106. Further, the first cable tray 108 may be monolithic with the mounting portion 106. Further. the first cable tray 108 may be configured to extend the width of the conveyor track.

For example, a warehouse is installed with a conveyor system. Further, the conveyor system comprises a track system 100 having a pair of conveyor tracks 102. Further, each of the conveyor tracks 102 defines an inner side 112 and an outer side 114. Further, the inner side 112 comprises a mounting portion 106 having the mounting surface 118 and a running portion 104 having the running surface 116. Further, the outer side 114 of each conveyor track comprises a first cable tray 108. Further, the conveyor system comprises a conveyor driving having a pair of wheels 206. Further, the mounting portion 106 may be configured to enable mounting of the conveyor drive 204 and the one or more accessories 600 with the pair of conveyor tracks 102. Further, the running portion 104 may be configured to enable movement of the conveyor drive 204 during operation of the conveyor system. Further, the first cable tray 108 is configured to carry one or more cables 302 associated with the conveyor drive 204 and the one or more accessories 600.

Secondly, the pair of side covers 400 may be mounted with the outer side 114 of the respective conveyor track. Further, the pair of side covers 400 may be configured to cover the first cable tray 108 of the respective conveyor track. In some embodiments, each side cover from the pair of side covers 400 may be detachably mounted with the outer side 114 of the respective conveyor track. In some embodiments, the pair of side covers 400 may be configured to cover the first cable tray 108 of the respective conveyor track. In some embodiments, each side cover from the pair of side covers 400 may be configured to cover the respective first cable tray 108 to hide the one or more cables 302 within the respective first cable tray 108.

For example, the track system 100 further comprises a pair of side covers 400. Further, each side cover from the pair of sider covers are configured to be detachably mounted with the outer side 114 of a respective conveyor track and the first cable tray 108. Further, the pair of side covers 400 are configured to cover each of the first cable tray 108 to hide the one or more cables 302 contained within the first cable tray 108.

Thereafter, the one or more connect rails 110 may be positioned between each of the pair of the pair of conveyor tracks 102 and coupled with the mounting portion 106. Further, the one or more connect rails 110 may have the second cable tray 304. Further, the one or more opening may be fabricated though the mounting portion 106 for passage of the one or more cables 302 across the first cable tray 108 and the second cable tray 304.

For example, the track system 100 may comprise the one or more connect rails 110. Further, the one or more connect rails 110 are positioned between each of the pair of conveyor tracks 102 to secure the pair of conveyor tracks 102 with each other. Further, each of the one or more connect rails 110 may provide the second cable tray 304. Further, the second cable tray 304 is configured to carry the one or more cables 302 across the first cable tray 108 and the second cable tray 304.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A track system comprising:
a pair of conveyor tracks, wherein each of the pair of the conveyor tracks define an inner side and an outer side, wherein each conveyor track comprises:
a running portion comprising a running surface on the inner side of the conveyor track;
a mounting portion comprising a mounting surface on the inner side of the conveyor track, wherein the running portion is monolithic with the mounting portion; and
a first cable tray monolithic with the mounting portion, wherein the first cable tray extends a width of the conveyor track;
a pair of side covers, each side cover detachably mounted with the outer side of a respective conveyor track, wherein the side cover is configured to cover the first cable tray of the respective conveyor track; and
one or more connect rails, each connect rail positioned between each of the pair of the conveyor tracks and coupled with the mounting portion, wherein the one or more connect rails have a second cable tray,
wherein one or more openings are fabricated through the mounting portion for passage of one or more cables across the first cable tray and the second cable tray.

2. The track system of claim 1, wherein the running portion, the mounting portion, and the first cable tray of each conveyor track are formed from a single piece of sheet metal, wherein each conveyor track has an S shape.

3. The track system of claim 1, wherein each connect rail comprises a first end and a second end, wherein the first end is coupled to one of the pair of the conveyor tracks and the second end is coupled to another one of the pair of the conveyor tracks.

4. The track system of claim 3, wherein the mounting portion of each conveyor track is fabricated with a slot, and wherein the slot is configured to detachably couple the first end and the second end of a respective connect rail with each of the pair of conveyor tracks.

5. The track system of claim 1, wherein the first cable tray is configured to hold the one or more cables along the respective conveyor track of the pair of conveyor tracks.

6. The track system of claim 1, wherein each side cover is configured to cover the respective first cable tray to hide the one or more cables within the respective first cable tray.

7. The track system of claim 1, wherein the running surface of the running portion and the mounting surface of the mounting portion are coplanar.

8. The track system of claim 1, wherein the side cover comprises a first end and a second end, wherein the first end is coupled with an extended structure of the running portion and the second end is coupled with the first cable tray.

9. The track system of claim 8, wherein the first end coupled to the extended structure of the running portion and the second end coupled to the first cable tray are on a same plane.

10. The track system of claim 8, wherein the extended structure and a portion of the first cable tray are coplanar and are is configured to enable installing of one or more accessories with the track system.

11. A method comprising:
mounting each side cover of a pair of side covers with an outer side of a respective conveyor track from a pair of conveyor tracks, wherein the pair of conveyor tracks comprises:
a running portion comprising a running surface on an inner side of the conveyor tracks;
a mounting portion comprising a mounting surface on the inner side of the conveyor track, wherein the mounting portion is monolithic with the running portion; and
a first cable tray monolithic with the mounting portion, wherein the first cable tray extends a width of the conveyor track;
positioning one or more connect rails between each of the pair of the conveyor tracks and coupled with the mounting portion, wherein the one or more connect rails having a second cable tray,
wherein one or more openings are fabricated through the mounting portion for passage of one or more cables across the first cable tray and the second cable tray.

12. The method of claim 11, wherein the running portion, the mounting portion, and the first cable tray of each conveyor tray are formed from a single piece of sheet metal, wherein each conveyor track has an S shape.

13. The method of claim 11, wherein each connect rails comprises a first end and a second end, wherein the first end is coupled to one of the pair of the conveyor tracks and the second end is coupled to another one of the pair of the conveyor tracks.

14. The method of claim 13, wherein the mounting portion of each conveyor track is fabricated with a slot, and wherein the slot is configured to detachably couple the first end and the second end of the respective connect rail with each of the pair of conveyor tracks.

15. The method of claim 11 further comprising holding, via the first cable tray, the one or more cables along the respective conveyor track of the pair of conveyor tracks.
